# EUROPÄISCHE PATENTSCHRIFT

(11) **EP 1 739 454 B1**
(45) Veröffentlichungstag und Bekanntmachung des Hinweises auf die Patenterteilung: **26.01.2011**
(21) Anmeldenummer: 06021820.3
(22) Anmeldetag: 23.03.1999
(51) Int. Cl.: G01S 13/93, G01S 13/87

(54) **Verfahren und Vorrichtung zur Objekterfassung für Kraftfahrzeuge**
Device for detecting objects for vehicles
Dispositif de détection d'objets pour véhicules

(30) Priorität: 23.04.1998 DE 19818089; 02.10.1998 DE 19845568
(43) Veröffentlichungstag der Anmeldung: 03.01.2007
(62) Teilanmeldung aus: 99105057.6
(73) Patentinhaber: Volkswagen Aktiengesellschaft, 38436 Wolfsburg (DE)
(72) Erfinder: Ruchartz, Thomas, 38165 Lehre (DE); Andreas, Peter, 38518 Gifhorn (DE); Mende, Ralph, 38102 Braunschweig (DE); Mai, Rudolf, 38442 Wolfsburg (DE); Zander, André, Dr., 39108 Magdeburg (DE); Ensslen, Arnold, 38442 Wolfsburg (DE); Bergholz, Ralf, Dr., 38108 Braunschweig (DE)

(56) Entgegenhaltungen:
- WO-A-98/00728
- DE-A- 19 501 612
- DE-A- 19 523 805
- DE-A- 19 637 245
- DE-A1- 19 638 387
- DE-C- 4 402 791
- US-A- 3 760 414
- US-A- 4 011 563
- US-A- 5 587 908

## Beschreibung

Die Erfindung betrifft eine Vorrichtung zur Objekterfassung für Kraftfahrzeuge gemäß dem Patentanspruch 1 und ein Verfahren zur Verfolgung von Objekten.

Aufgrund der zunehmenden Verkehrsdichte steigen die Anforderungen hinsichtlich der Wahrnehmung des Verkehrsgeschehens an einen Kraftfahrzeugführer kontinuierlich an. Daher wurden bereits vielfältige Anstrengungen unternommen, Fahrer-Assistenzsysteme zu schaffen, um den Kraftfahrzeugführer zu entlasten. Eine sehr wichtige Information für den Kraftfahrzeugführer ist der Abstand eines Objektes sowie die Bewegung des Objektes zum Kraftfahrzeug. Diese Daten werden beispielsweise für automatische Abstandsregelungen, aktive und passive Kollisionsverhinderungseinrichtungen oder für eine Precrash-Sensorik zur frühzeitigen Auslösung eines passiven Fahrzeuginsassenrückhaltesystems benötigt.

Aus der DE 38 27 729 ist eine Kollisionswarneinrichtung für Kraftfahrzeuge bekannt, insbesondere zur Vermeidung von Kollisionen mit stehenden Hindernissen im Nahbereich eines Kraftfahrzeuges, mit einer Abstandsmeßeinrichtung zur berührungslosen Abstands-Lageerkennung für ein Objekt im Bereich des Kraftfahrzeuges, wobei wenigstens ein Sensor zur Erfassung der einem bestimmten, gerade vorliegenden Fahrzeugbetriebszustand entsprechenden Fahrzeugkurs vorgesehen ist und die entsprechenden Bewegungssignale abgibt, daß die Abstands- und Lagesignale sowie die Bewegungssignale einer Auswerteeinheit zuführt werden, die anhand dieser Signale unter Berücksichtigung der fahrzeugspezifischen Gegebenheiten errechnet, ob eine Kollision mit dem erfaßten Objekt möglich ist, wobei das Ergebnis auf einer Anzeigeeinheit darstellbar ist. Besonders vorteilhaft wird als Abstandsmeßeinrichtung je eine Sende-/Empfangseinheit für Ultraschallsignale und für eine schmale Sendekeule eines Infrarot-Strahls an diagonal gegenüberliegenden Ecken eines Kraftfahrzeuges angebracht. Der Infrarot-Strahl dient zur Lageerkennung und Zuordnung einer Winkelposition für ein Objekt in je einem 270°-Winkelbereich vor bzw. hinter dem Kraftfahrzeug und seitlich davon. Mit der schmalen Sendekeule des Infrarot-Strahls wird jeweils dieser Bereich schnell abgetastet. Zudem sind die 270°-Winkelbereiche in jeweils drei 90°-Bereiche unterteilt, die von je einer Ultraschallmeßeinheit umfaßt sind. Damit wird die hohe Genauigkeit der Ultraschallmessung bei der Abstandsmessung und die schnellere Datenerfassung mit Infrarotlicht zur Lagebestimmung ausgenützt, wobei der gesamte Bereich um ein Fahrzeug herum erfaßt wird.

Aus der DE 44 23 966 ist ein Hinderniserfassungssystem bekannt, welches eine Hinderniserfassungseinrichtung, z.B. einen Laserradar, zur Erfassung einer dynamischen Relativität des Fahrzeuges in bezug auf jedes Hindernis vor dem Fahrzeug aufweist, die mindestens durch eine Geschwindigkeit und eine Richtung des Hindernisses dargestellt wird. Das Gefahrenniveau der erfaßten Hindernisse wird entsprechend der dynamischen Relativität bestimmt, und die Gefahrenbeurteilung bei einer Frequenz durchgeführt, die entsprechend dem Gefahrenniveau ansteigend oder abfallend verändert wird. Insbesondere wird ein sich bewegendes Hindernis als hohes Gefahrenniveau eingestuft, wenn es sich relativ zum Fahrzeug annähert, wenn ein Abstand von dem Fahrzeug geringer als ein vorbestimmter Abstand ist und/oder wenn es sich auf der vorausgehenden Bahn befindet, auf der das Fahrzeug fährt. Andererseits wird das Gefahrenniveau eines Hindernisses als niedrig bestimmt, wenn das Hindernis stillsteht, wenn es sich weit vom Fahrzeug wegbewegt, wenn es sich in einem Abstand vom Fahrzeug befindet, der größer als der vorbestimmte Abstand ist oder wenn es sich nicht auf der vorausgehenden Bahn befindet. Mit dem Hinderniserfassungsystem wird eine Gefahrenbeurteilung nicht direkt auf der Grundlage der dynamischen Relativität zwischen dem Fahrzeug und dem Objekt vorgenommen, sondern das Gefahrenniveau wird entsprechend der dynamischen Relativität bestimmt. Die Frequenz der Operation für die Gefahrenbeurteilung eines Objektes wird erhöht, wenn das Objekt ein hohes Gefahrenniveau darstellt oder erniedrigt, wenn es ein niedriges Gefahrenniveau darstellt. D.h., die Operation der Gefahrenbeurteilung wird nicht bei gleichförmiger Frequenz für alle Hindernisse, sondern bei unterschiedlichen Frequenzen entsprechend den Gefahrenniveaus durchgeführt. Dies ermöglicht eine Steigerung der Belastung, die die CPU unterworfen werden kann. Infolge der niedrigen Frequenz der Gefahrenbeurteilungsoperation für Hindernisse mit niedrigem Gefahrenniveau kann die CPU andererseits mit einer hohen Frequenz für Hindernisse mit hohem Gefahrenniveau arbeiten, so daß sie ohne irgendeine Verzögerung in der Operation und der Beantwortung arbeitet, so daß eine zeitgerechte und schnelle Steuerung des Fahrzeugs zur Vermeidung des Hindernisses geschaffen wird.

Aus der DE 195 01 612 ist eine Vorrichtung zur Objekterkennung mit zwei Meßvorrichtungen bekannt. Eine erste besitzt eine kleine Reichweite mit einer absolut gesehen hohen Meßgenauigkeit, während die zweite Meßvorrichtung eine große Reichweite mit einem Auflösungsvermögen besitzt, das in der Größenordnung der Reichweite der ersten Meßvorrichtung liegt. Vorzugsweise sollen die beiden Meßvorrichtungen mittels bereits im Kraftfahrzeug befindlicher Sensoren realisiert werden, beispielsweise eine Abstands-Meßvorrichtung als Laser- oder Radarbasis für große Entfernungen und eine Ultraschall-Meßvorrichtung, die als Einparkhilfe verwendet wird. Das Zusammenspiel der beiden Meßvorrichtungen ist auf unterschiedliche Weise möglich. So kann die Dominanz der einen Meßvorrichtung abhängig von der Entfernung eines Objektes eingestellt werden. Dabei kann man über eine gegenläufige lineare oder nichtlineare Gewichtung des Nah- und Fernbereichs-Sensors den Abstandsmeßwert bestimmen. Ausgehend von einer Betriebsweise, bei der beide Meßvorrichtungen gleichberechtigt arbeiten, wird bei Eintritt eines Objekts in den Meßbereich der einen Meßvorrichtung diese bevorzugt wirksam und die andere Meßvorrichtung ausgeschaltet. Insbesondere dann, wenn es sich bei der dominanten Meßvorrichtung um diejenige handelt, die den großen Entfernungsbereich abdeckt, kann die andere Meßvorrichtung mit untergeordneter Bedeutung wirksam bleiben. Es lassen sich dann überraschend in den Meßbereich der ersten Meßvorrichtung eintretende Hindernisse noch erkennen und entsprechende Gegenmaßnahmen einleiten. Die Dominanz der jeweiligen wirksamen Meßvorrichtung kann aber auch selbsttätig in Abhängigkeit von der Fahrzeuggeschwindigkeit eingestellt werden.

Aus der DE 195 23 805 ist eine Mikrostreifenantenne zur Verwendung in einem Fahrzeugkollisionssystem bekannt, umfassend eine leitende Platte und ein isolierendes Substrat, das auf einer Seite der Platte angebracht ist und eine dielektische Wellenlänge bei der gewünschten hohen Frequenz besitzt, eine planare Mikrowellen-Streifenschaltung, die auf dem Substrat angeordnet ist und aus einer Hauptleitung geformt ist, entlang der in gleichen Intervallen eine Vielzahl von Zweigleitungen in regelmäßigem Abstand verteilt ist, die mit Verbindungen mit der Hauptleitung verbunden sind und von diesem aus in rechtem Winkel verlaufen, ein Feld planarer strahlender Elemente, das auf dem Substrat angeordnet ist, wobei die Elemente entlang Spalten in regelmäßigen Intervallen eines ganzen Vielfachen der dielektrischen Wellenlänge entlang einer Seite der Zweigleitungen verteilt sind, wobei jedes strahlende Element mit einer benachbarten Zweigleitung verbunden ist, wobei die Zweigleitung wenigstens einen Einspeisepunkt besitzt, der so angeordnet ist, daß er eine gewünschte. Leistungsverteilung von der Hauptleitung in die jeweiligen damit verbundenen Zweigleitungen bewirkt, um einen Strahl mit einer Strahlbreite und mit niedrigen Seitenkeulen herzustellen, wobei jede der Zweigleitungen die Impedanz an der Verbindung der Zweigleitung mit der Hauptleitung beeinflußt, die Hauptleitung eine Vielzahl von Streifen-Überträgern enthält, die jeweils mit Abstand zwischen den Verbindungen angeordnet und so ausgewählt sind, daß sie Reflexionen von den Verbindungen minimieren. Die Zweigleitungen sind mit der Hauptleitung über Kopplungsleiter verbunden, deren Mikrowelleneigenschaften so ausgewählt sind, daß sie die Leitungsmenge bestimmen, die von der Hauptleitung in die Zweigleitungen, mit denen die Kopplungsleiter verbunden sind, eingekoppelt wird.

Aus der DE 196 38 387 A1 ist ein Verfahren zur Kollisionserkennung von Fahrzeugen bekannt, bei dem zwei Doppler-Radar-Einrichtungen verwendet werden, die räumlich voneinander getrennt an einem Fahrzeug angeordnet sind und aus deren Ausgangssignalen zu aufeinander folgenden Zeitpunkten die Relativgeschwindigkeiten eines Objektes bezüglich der Doppler-Radar-Einrichtungen und aus dem Verlauf der Relativgeschwindigkeiten die Bewegungsbahn des Objekts bestimmt werden.

Aus der US 5 587 908 ist eine Abstandmessvorrichtung von Fahrzeugen bekannt, bei der die Zielaufäsung durch einen Filter optimiert wird.

Nachteilig an allen bekannten Vorrichtungen zur Objekterfassung ist, daß diese entweder nur speziell auf eine bestimmte Zielstellung abgestimmt sind oder aber nicht ausreichend flexibel für unterschiedliche Steuergeräte des Kraftfahrzeuges verwendbar sind.

Der Erfindung liegt daher das technische Problem zugrunde, eine Vorrichtung zur Objekterfassung in einem Kraftfahrzeug, die Daten für unterschiedliche Assistenz-Vorrichtungen bereitstellen kann und flexibel wechselnde Gegebenheiten anpaßbar ist und ein Verfahren zur Verfolgung von Objekten zu schaffen.

Die Lösung des technischen Problems ergibt sich durch die Merkmale des Patentanspruchs 1. Durch die wahlweise Ansteuerbarkeit der Abstands-Sensoren durch die Auswerteeinheit, wobei eine Auflösung der Abstandssensoren veränderbar ist, kann die Vorrichtung zur Objekterfassung gleichzeitig oder nacheinander Daten für verschiedene Fahrer-Assistenz-Vorrichtungen, wie beispielsweise Fahrer-Rückhalte-Systeme, ADR-Systeme, Fahrspurwechsel-Einrichtungen, Fahrspurerkennungs-Einrichtungen, Einparkhilfe-Einrichtungen und ähnliches liefern, so daß aufgrund dieser multifunktionalen Vorrichtung der schaltungstechnische Aufwand für die Realisierung der verschiedenen Fahrer-Assistenz-Systeme erheblich verringert wird. Dazu werden die Abstands-Sensoren je nach der zu lösenden Detektionsaufgabe von der Auswerteeinheit verschieden eingestellt, wobei jeweils eine Optimierung an die zu lösende Aufgabe angestrebt wird. Durch die flexible Ansteuerung der Abstands-Sensoren durch die Auswerteeinheit können die verfügbaren Ressourcen wie beispielsweise die begrenzte Rechenleistung oder auch die physikalisch bedingte Mindestbeobachtungsdauer eines Objektes optimal aufgeteilt werden. Dadurch ergibt sich insgesamt eine höhere Leistungsfähigkeit der Vorrichtung gegenüber einem festeingestellten Satz von Sensoren. Unter Abstands-Sensoren werden allgemein alle Sensoren verstanden, aus deren Meßsignalen auf den Abstand eines Objektes geschlossen werden kann, unabhängig davon, ob aus den Signalen noch andere Meßgrößen direkt ableitbar sind, wie beispielsweise die Geschwindigkeit bei einem Radarsensor. Unter Betriebsart der Abstands-Sensoren ist beispielsweise zu verstehen, ob nur eine Abstandsmessung vorgenommen wird, wie beispielsweise für eine Einparkhilfe, oder ob eine kombinierte Abstands- und Geschwindigkeitserfassung des Objektes vorgenommen wird. Weitere vorteilhafte Ausgestaltungen der Erfindung ergeben sich aus den Unteransprüchen.

Die Erfindung wird nachfolgend anhand eines bevorzugten Ausführungsbeispiels näher erläutert. Die Fig. zeigen:
Fig. 1 eine schematische Draufsicht auf ein Kraftfahrzeug mit einer Vorrichtung zur Objekterfassung als Precrash-Sensorik,
Fig. 2 eine schematische Draufsicht auf ein Kraftfahrzeug mit der Vorrichtung zur Objekterfassung als Bestandteil einer Precrash-Sensorik, eines ADR-Systems und einer Fahrspurwechsel-Einrichtung und
Fig. 3 eine Draufsicht auf eine Anordnung mit Scan-Sensoren.

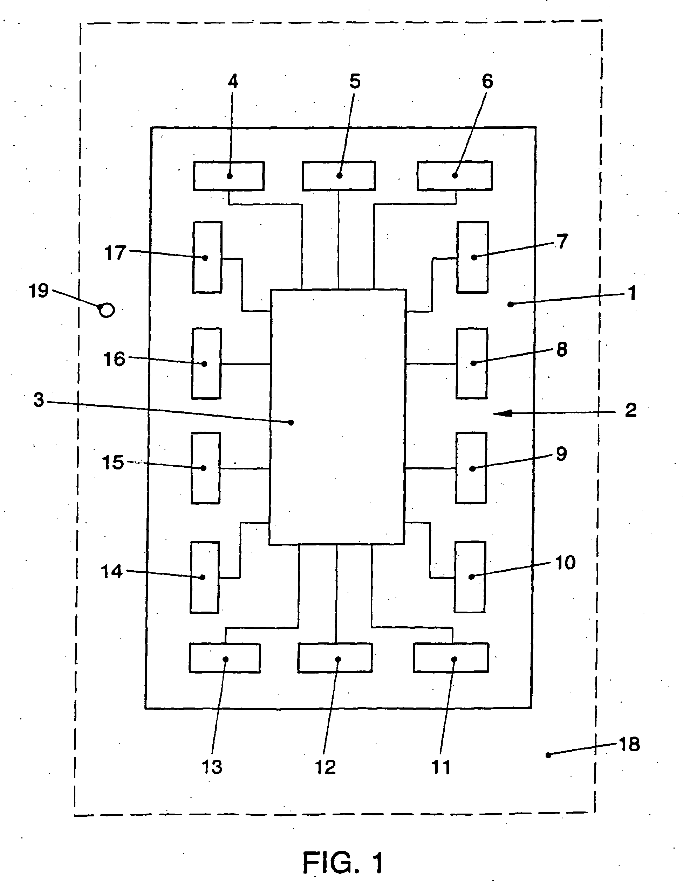

In der Fig. 1 ist in einer Draufsicht ein Kraftfahrzeug 1 mit einer Vorrichtung 2 zur Objekterfassung für eine Precrash-Sensorik oder eine aktive Kollisionsverhinderungs-Einrichtung in einer ersten Ausführungsform dargestellt. Die Vorrichtung 2 zur Objekterfassung umfaßt eine Auswerteeinheit 3 und eine Anzahl von Abstands-Sensoren 4-17, die um das Kraftfahrzeug 1 herum derart angeordnet sind, so daß diese 360° um das Kraftfahrzeug 1 herum abdecken. Die Abstands-Sensoren 4-17 sind mit der Auswerteeinheit 3 bidirektional verbunden, wobei die Abstands-Sensoren 4-17 Objektdaten an die Auswerteeinheit 3 liefern und die Auswerteeinheit 3 Steuersignale an die Abstands-Sensoren 4-17 liefert. Die Abstands-Sensoren 4-17 sind alle gleichförmig eingestellt, d.h. alle weisen die gleiche Reichweite von beispielsweise 6 m auf und erfassen eine Fahrzeugumgebung 18. Da die Rechenleistung der Auswerteeinheit 3 bei vertretbaren Herstellungskosten beschränkt ist, können die Abstands-Sensoren 4-17 nicht mit beliebig hohen Meßwiederholfrequenz betrieben werden. Daher werden die Abstands-Sensoren 4-17 einzeln oder gruppenweise ausgelesen, wobei beispielsweise eine Periodendauer von 20 ms gewählt wird. Tritt nun ein Objekt 19 in die Fahrzeugumgebung 18 ein, so wird dies beispielsweise von den Abstands-Sensoren 16,17 erfaßt. Mittels bekannter Algorithmen kann dann die Auswerteeinheit 3 auf den Abstand a und die Relativgeschwindigkeit Vᵣₑₗ schließen. Aus der Erfassung des Objektes 19 allein kann aber noch kein sicherer Schluß gezogen werden, ob es zu einer Kollision kommen kann oder nicht. Da aber andererseits die Precrash-Sensorik möglichst frühzeitig die Sicherheitskomponenten wie Airbag und Gurtstraffer auslösen muß, um deren optimale Wirkung zur Entfaltung zubringen, wird die Meßwiederholfrequenz der für das Objekt 19 relevanten Abstands-Sensoren 15-17 erhöht. Diese relevanten Abstands-Sensoren 15-17 überwachen nun das Objekt 19 mit einer erhöhen Meßwiederholfrequenz, wobei je nach Bewegung des Objektes 19 die relevanten Abstands-Sensoren sich ändern können. Die Nachführung der relevanten Abstands-Sensoren erfolgt mittels eines Tracking-Verfahrens. Das Tracking führt eine Vergangenheitsbewertung durch und verknüpft immer wieder aktuell erfaßte Ziele mit ihren entsprechenden "Tracks", die in einem der Auswerteeinheit zugeordneten Speicher abgelegt sind. Dadurch werden die Zustandsgrößen der Objekte gefiltert und es kann vorausschauend eine Position und/oder Geschwindigkeit prädiziert werden. Das Tracking füllt auch kurzzeitige Ausfälle der Detektion der Objekte auf, so daß insgesamt durch die Filterung, Mittelung und die Speicherung aller Informationen über einen Zeitraum von beispielsweise zehn Meßzyklen eine größere Sicherheit bei der Interpretation der Situation und eine erhöhte Schätzgenauigkeit der erfaßten Größen möglich ist. Darüber hinaus kann das Tracking durch das Zusammenfassen von mehreren Reflexionszentren an einem ausgedehnten Objekt, wie beispielsweise einem Kraftfahrzeug, neben den einzelnen getrackten Zentren Kombinationen derselben bilden, die zu einem physikalischen Objekt gehören. Weiterhin kann auch bei einem kurvenförmigen Verlauf der Fahrspur eine andere Priorisierung der Objekte bei der Vermessung erfolgen als bei einer Geradeausfahrt.

Die erhöhte Rechenleistung für die relevanten Abstands-Sensoren 15-17 bedingt eine Reduktion der Auswertung der anderen Abstands-Sensoren. Da jedoch die Überwachung des vorderen Verkehrsraumes weiterhin relevant bleibt, wird zunächst auf eine Auswertung der auf der gegenüberliegenden Seite befindlichen Abstands-Sensoren 7-10 verzichtet bzw. deren Meßwiederholfrequenz reduziert. Sollte zusätzliche Rechenleistung benötigt werden, so können zusätzlich die hinteren Abstands-Sensoren 11-13 abgeschaltet oder deren Meßwiederholfrequenz reduziert werden. Vorzugsweise wird zunächst versucht, die zur Verfügung stehende Rechenleistung nur durch eine Reduzierung der Meßwiederholfrequenz bzw. einer beschränkten Auswertung der anderen Abstands-Sensoren zu erreichen. Eine Möglichkeit besteht darin, stets eine Abstandsmessung vorzunehmen, jedoch die Geschwindigkeitserfassung mit einer geringen Auflösung (kurze Beobachtungsdauer des Objektes) durchzuführen, was bereits Rechenleistung einspart. Dadurch bleibt die Rundumüberwachung des Kraftfahrzeuges erhalten und möglicherweise zusätzlich auftretende Objekte werden weiterhin erfaßt. Sollte beispielsweise ein zweites Objekt erfaßt werden, so sind beide Objekte möglichst mit einer erhöhten Meßwiederholfrequenz zu verfolgen. Reicht die zur Verfügung stehende Rechenleistung trotz der Reduzierungsmaßnahmen für die anderen Sensoren nicht aus, so muß die Auswerteeinheit die beiden Objekte bewerten und den das kritischere Objekt verfolgenden Abstands-Sensoren Priorität einräumen. Die relevanten Abstands-Sensoren 15-17 verfolgen das Objekt 19 solange, bis feststeht, daß es unvermeidlich zu einer Kollision kommt oder aber das Objekt 19 wieder die Fahrzeugumgebung 18 verläßt. Bei Erkennung einer zu erwartenden Kollision werden durch die Auswerteeinheit 3 die betreffenden Airbags und Gurtstraffer ausgelöst. Die Abstands-Sensoren 4-17 sind jedoch nicht nur wahlweise und mit unterschiedlicher Meßwiederholfrequenz ansteuerbar, sondern auch hinsichtlich ihrer Reichweite veränderbar.

Die technische Realisierung einer veränderbaren Reichweite ist abhängig von der Art der verwendeten Abstands-Sensoren 4-17. In Frage kommen beispielsweise die Variation der abgestrahlten Leistung, eine Impuls-Blende-Funktion, ein veränderlicher Abstrahlwinkel und ähnliches. Die in Fig. 1 dargestellte Vorrichtung 2 kann nun ohne schaltungstechnische Modifikation auch für eine Einparkhilfe-Einrichtung verwendet werden. Dazu muß jedoch die Reichweite der Abstands-Sensoren 4-17 erniedrigt werden, deren Meßwiederholfrequenz erhöht und die Abstandsauflösung ebenfalls erhöht werden. Diese Umgestaltung kann manuell oder aber auch automatisch durch die Auswerteeinheit 3 erfolgen, beispielsweise durch Auswertung der eignen Geschwindigkeit und des eingelegten Gangs. Ähnlich wie bei der erhöhten Meßwiederholfrequenz zur Verfolgung des Objektes 19 muß Rechenleistung an anderer Stelle eingespart werden. Dies kann beispielsweise wieder durch Abschaltung einzelner Abstands-Sensoren 4-17 erfolgen, die im Moment keine relevanten Daten liefern könnten, aber auch durch Verzicht bestimmter Berechnungen. So ist beispielsweise die Bestimmung der Relativgeschwindigkeit Vᵣₑₗ eines Objektes 19 für eine Einparkhilfe-Einrichtung unwichtig.

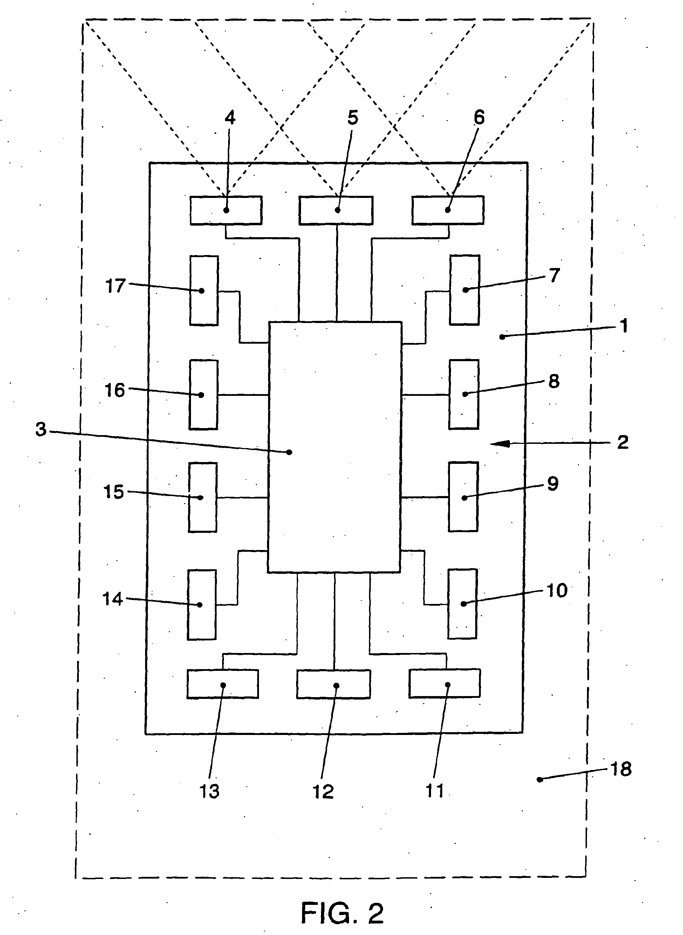

In der Fig. 2 ist eine zweite Ausführungsform dargestellt, bei der Vorrichtung 2 gleichzeitig Daten für drei Fahrer-Assistenz-Systeme liefert. Die Abstands-Sensoren 4-6 liefern dabei Daten für ein ADR-System, wozu die Abstands-Sensoren 4-6 mit einer größeren Reichweite angesteuert werden. Aufgrund des im Verhältnis zur Precrash-Sensorik zeitunkritischen Verhalten können diese jedoch mit einer geringeren Abtastrate angesteuert werden. Die Abstands-Sensoren 11-13 dienen für eine rückwärtige Warnung, beispielsweise die zu hohe und nicht angemessene Relativgeschwindigkeit des rückwärtigen Verkehrs auf das Kraftfahrzeug 1 zu, so der rückwärtige Verkehr mittels zusätzlicher Rückleuchten und der Kraftfahrzeugführer durch haptische, akustische und/oder optische Warnmittel gewarnt werden kann. Die Abstands-Sensoren 11-13 weisen analog der Abstands-Sensoren 4-6 eine große Reichweite von beispielsweise 20-30 m bei einer geringen Meßwiederholfrequenz auf. Die Abstands-Sensoren 7-10, 14-17 dienen vornehmlich wieder als Precrash-Sensorik, wobei diese aufgrund der geringen Meßwiederholfrequenz der Abstands-Sensoren 4-6, 11-13 mit einer höheren Abtastperidendauer von beispielsweise 10 ms betrieben werden können. Des weiteren liefern die Abstands-Sensoren 7-10, 14-17 Daten für eine Spurwechsel-Assistenz-Einrichtung. Allgemeines Problem beim Spurwechsel sind Objekte im toten Winkel der Rück- und Außenspiegel, wobei der Bereich des toten Winkels abhängig von der Spiegeleinstellung ist.

Wie aber bereits aus der Fig. 1 oder 2 leicht ersichtlich ist, erfassen die Abstands-Sensoren 7-10, 14-17 alle Objekte innerhalb einer gewissen Reichweite parallel zum Kraftfahrzeug 1 und somit auch im toten Winkel. Ähnlich wie bei bereits bekannten Spurwechsel-Assistenz-Systemen wird ein beabsichtigter Spurwechsel beispielsweise durch Betätigung des Fahrtrichtungsanzeigers oder durch Auswertung einer Fahrspurerkennung erkannt. Durch Erfassung der Spiegelstellungen durch die Auswerteeinheit 3 kann diese den Bereich des toten Winkels berechnen. Durch Auswertung der Daten der jeweiligen Abstands-Sensoren 7-10 oder 14-17 kann dann ein Objekt im toten Winkel erfaßt und an die Spurwechsel-Assistenz-Einrichtung gemeldet werden, die dann gegebenenfalls den Kraftfahrzeugführer haptisch oder akustisch warnt. Die zur Aktivierung der Spurwechsel-Assistenz-Einrichtung erwähnte Fahrspurerkennung kann ebenfalls über die Abstands-Sensoren 4-17 realisiert werden, beispielsweise durch Auswertung der Randbebauung und des Gegenverkehrs.

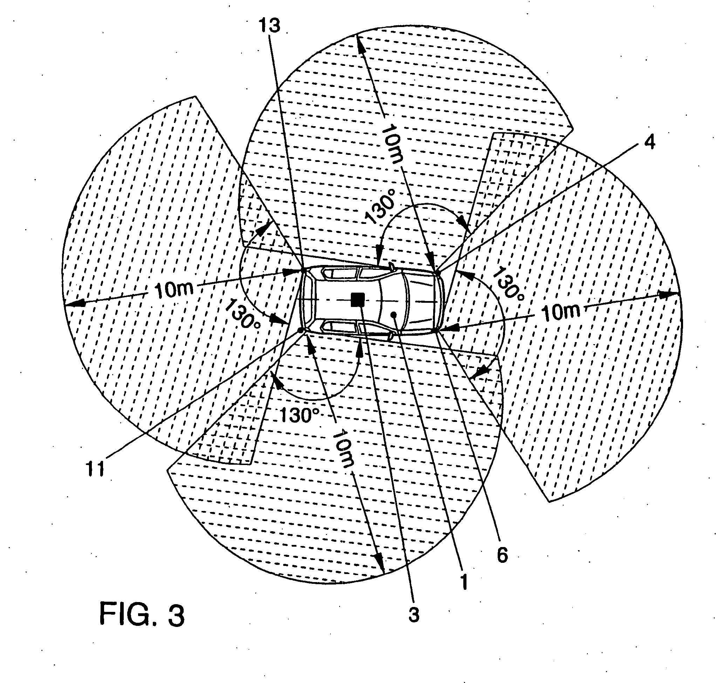

In der Fig. 3 ist eine alternative Ausführungsform zur Anordnung der Abstands-Sensoren 4, 6, 11, 13 dargestellt. Die Abstands-Sensoren 4, 6, 11, 13 sind dabei als Laser- und/oder Radar-Scanner-Sensoren ausgebildet und jeweils an den Ecken des Kraftfahrzeuges 1 angeordnet. Die Abstands-Sensoren 4, 6, 11, 13 weisen einen Scan-Bereich von 130° auf, so daß sie die Fahrzeugumgebung vollständig erfassen.

Wie gezeigt, dienen die Daten der Abstands-Sensoren 4-17 für eine Vielzahl von Fahrer-Assistenz-Systemen. Daher wird die Auswerteeinheit 3 vorzugsweise über einen CAN-Bus mit den einzelnen Steuergeräten der verschiedenen Fahrer-Assistenz-Systeme verbunden, so daß auch ein Datenaustausch zwischen den Fahrer-Assistenz-Systemen möglich ist.

## Patentansprüche

1. Vorrichtung zur Objekterfassung für Kraftfahrzeuge, umfassend eine durch eine Vielzahl von Abstands-Sensoren gebildete Abstands-Sensorik, die derart an dem Kraftfahrzeug (1) angeordnet sind, dass diese die Umgebung des Kraftfahrzeugs (1) abtasten, und eine Auswerteeinheit (3), die aus den Daten der Abstands-Sensorik die Bewegungsbahn und die Geschwindigkeit eines Objektes relativ zu dem Kraftfahrzeug (1) ermittelt,
**dadurch gekennzeichnet, dass**
die Abstandssensoren (4-17) wahlweise durch die Auswerteeinheit (3) ansteuerbar sind und die Auflösung der Abstands-Sensoren (4-17) veränderbar ist, wobei gleichzeitig oder nacheinander Daten für verschiedene Fahrer-Assistenz-Vorrichtungen unterschiedlicher Auflösung zur Verfügung gestellt werden, wobei die erhöhte Rechenleistung aufgrund einer erhöhten Auflösung durch eine veränderte Betriebsart der Abstands-Sensoren und/oder eine situationsabhängige Abschaltung einzelner Abstands-Sensoren (4-17) durch die Auswerteeinheit (3) kompensiert wird.

2. Vorrichtung zur Objekterfassung nach Anspruch 1, **dadurch gekennzeichnet, dass** die Abstands-Sensoren (4-17) als Radar-Frontend und/oder Infrarot-Sensoren und/oder Infrarot-Scanner und/oder Laser-Sensoren und/oder als Video-Kamera-System ausgebildet sind.

3. Vorrichtung zur Objekterfassung nach Anspruch 2, **dadurch gekennzeichnet, dass** die Antennen der Radar-Sensoren als Mikrostreifenantenne ausgebildet sind.

4. Vorrichtung nach einem der vorangehenden Ansprüche, **dadurch gekennzeichnet, dass** die Auswerteeinheit (3) über einen CAN-Bus mit den verschiedenen Steuergeräten der einzelnen Fahrer-Assistenz-Systeme verbunden ist.

5. Vorrichtung nach einem der vorangehenden Ansprüche, **dadurch gekennzeichnet, dass** die Abstands-Sensoren (4-17) wahlweise simultan und/oder sequentiell ansteuerbar sind.

6. Vorrichtung nach einem der vorangegangenen Ansprüche, **dadurch gekennzeichnet, dass** die Vorrichtung (2) zur Objekterfassung zum Erfassen von Objekten (19) im Bereich des toten Winkels des Kraftfahrzeuges (1) verwendet wird.

7. Verfahren zur Objekterfassung für Kraftfahrzeuge, mittels einer durch eine Vielzahl von Abstands-Sensoren (4-17) gebildeten Abstands-Sensorik, die derart an dem Kraftfahrzeug (1) angeordnet sind, dass diese die Umgebung des Kraftfahrzeugs (1) abtasten, und einer Auswerteeinheit (3), die aus den Daten der Abstands-Sensorik die Bewegungsbahn und die Geschwindigkeit eines Objekts relativ zu dem Kraftfahrzeug (1) ermittelt,
**dadurch gekennzeichnet, dass**
die Abstandssensoren (4-17) wahlweise durch die Auswerteeinheit (3) ansteuerbar sind und die Auflösung der Abstands-Sensoren (4-17) veränderbar ist, wobei gleichzeitig oder nacheinander Daten für verschiedene Fahrer-Assistenz-Vorrichtungen unterschiedlicher Auflösung zur Verfügung gestellt werden, wobei die erhöhte Rechenleistung aufgrund einer erhöhten Auflösung durch eine veränderte Betriebsart der Abstands-Sensoren und/oder eine situationsabhängige Abschaltung einzelner Abstands-Sensoren (4-17) durch die Auswerteeinheit (3) kompensiert wird.

## Claims

1. Device for detecting objects for motor vehicles, comprising a distance sensor system which is formed by a plurality of distance sensors which are arranged on the motor vehicle (1) in such a way that they sense the surroundings of the motor vehicle (1), and an evaluation unit (3) which determines, from the data of the distance sensor system, the movement path and the speed of an object relative to the motor vehicle (1),
**characterized in that**
the distance sensors (4-17) can be optionally actuated by the evaluation unit (3), and the resolution of the distance sensors (4-17) can be varied, wherein data for various driver assistance devices with different resolutions can be made available simultaneously or successively, wherein the increased computational power owing to an increased resolution is compensated by a changed operating mode of the distance sensors and/or a situation-dependent deactivation of individual distance sensors (4-17) by the evaluation unit (3).

2. Device for detecting objects according to Claim 1, **characterized in that** the distance sensors (4-17) are embodied as a radar front-end and/or infrared sensors and/or infrared scanners and/or laser sensors and/or as a video camera system.

3. Device for detecting objects according to Claim 2, **characterized in that** the antennas of the radar sensors are embodied as microstrip antennas.

4. Device according to one of the preceding claims, **characterized in that** the evaluation unit (3) is connected via a CAN bus to the various control units of the individual driver assistance systems.

5. Device according to one of the preceding claims, **characterized in that** the distance sensors (4-17) can be optionally actuated simultaneously and/or sequentially.

6. Device according to one of the preceding claims, **characterized in that** the device (2) for detecting objects is used for detecting objects (19) in the region of the blind spot of the motor vehicle (1).

7. Method for detecting objects for motor vehicles, by means of a distance sensor system which is formed by a plurality of distance sensors (4-17) which are arranged on the motor vehicle (1) in such a way that they sense the surroundings of the motor vehicle (1), and an evaluation unit (3) which determines, from the data of the distance sensor system, the movement path and the speed of an object relative to the motor vehicle (1),
**characterized in that**
the distance sensors (4-17) can be optionally actuated by the evaluation unit (3), and the resolution of the distance sensors (4-17) can be varied, wherein data for various driver assistance devices with different resolutions can be made available simultaneously or successively, wherein the increased computational power owing to an increased resolution is compensated by a changed operating mode of the distance sensors and/or a situation-dependent deactivation of individual distance sensors (4-17) by the evaluation unit (3).

## Revendications

1. Dispositif de détection d'objet pour véhicules automobiles, comprenant un dispositif de détection de distance constitué d'une pluralité de détecteurs de distance qui sont disposés sur le véhicule automobile (1) de telle sorte que ceux-ci balayent l'environnement du véhicule automobile (1), et une unité d'interprétation (3) qui, à partir des données du dispositif de détection de distance, détermine la trajectoire de déplacement et la vitesse d'un objet par rapport au véhicule automobile (1), **caractérisé en ce que** les détecteurs de distance (4-17) peuvent être commandés au choix par l'unité d'interprétation (3) et la résolution des détecteurs de distance (4-17) est modifiable, des données pour différents dispositifs d'assistance au conducteur ayant des résolutions différentes étant fournies simultanément ou successivement, la puissance de calcul accrue du fait d'une résolution plus élevée étant compensée par un mode de fonctionnement modifié des détecteurs de distance et/ou une déconnexion en fonction de la situation de certains détecteurs de distance (4-17) par l'unité d'interprétation (3).

2. Dispositif de détection d'objet selon la revendication 1, **caractérisé en ce que** les détecteurs de distance (4-17) sont réalisés sous la forme d'un radar frontal et/ou de capteurs à infrarouges et/ou d'un scanner à infrarouges et/ou de capteurs laser et/ou d'un système à caméra vidéo.

3. Dispositif de détection d'objet selon la revendication 2, **caractérisé en ce que** les antennes des capteurs radar sont réalisées sous la forme d'une antenne à microrubans.

4. Dispositif selon l'une des revendications précédentes, **caractérisé en ce que** l'unité d'interprétation (3) est reliée par le biais d'un bus CAN avec les différents modules de commande de chacun des systèmes d'assistance au conducteur.

5. Dispositif selon l'une des revendications précédentes, **caractérisé en ce que** les détecteurs de distance (4-17) peuvent, au choix, être commandés simultanément et/ou séquentiellement.

6. Dispositif selon l'une des revendications précédentes, **caractérisé en ce que** le dispositif (2) de détection d'objet est utilisé pour détecter des objets (19) dans la zone de l'angle mort du véhicule automobile (1).

7. Procédé de détection d'objet pour véhicules automobiles, au moyen d'un dispositif de détection de distance constitué d'une pluralité de détecteurs de distance (4-17) qui sont disposés sur le véhicule automobile (1) de telle sorte que ceux-ci balayent l'environnement du véhicule automobile (1), et d'une unité d'interprétation (3) qui, à partir des données du dispositif de détection de distance, détermine la trajectoire de déplacement et la vitesse d'un objet par rapport au véhicule automobile (1), **caractérisé en ce que** les détecteurs de distance (4-17) peuvent être commandés au choix par l'unité d'interprétation (3) et la résolution des détecteurs de distance (4-17) est modifiable, des données pour différents dispositifs d'assistance au conducteur ayant des résolutions différentes étant fournies simultanément ou successivement, la puissance de calcul accrue du fait d'une résolution plus élevée étant compensée par un mode de fonctionnement modifié des détecteurs de distance et/ou une déconnexion en fonction de la situation de certains détecteurs de distance (4-17) par l'unité d'interprétation (3).
